(19) Europäisches Patentamt
European Patent Office
Office européen des brevets

(11) **EP 3 693 405 B1**

(12) **EUROPEAN PATENT SPECIFICATION**

(45) Date of publication and mention
of the grant of the patent:
**06.11.2024 Bulletin 2024/45**

(21) Application number: **18864184.9**

(22) Date of filing: **27.09.2018**

(51) International Patent Classification (IPC):
**C08G 69/24** (2006.01)

(52) Cooperative Patent Classification (CPC):
**C08G 69/24**

(86) International application number:
**PCT/JP2018/036109**

(87) International publication number:
**WO 2019/069799 (11.04.2019 Gazette 2019/15)**

(54) **PRODUCTION METHOD FOR POLYAMIDE-4 PARTICLES**

VERFAHREN ZUR HERSTELLUNG VON POLYAMID-4-PARTIKELN

PROCÉDÉ DE PRODUCTION DE PARTICULES DE POLYAMIDE-4

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2017 JP 2017193534**

(43) Date of publication of application:
**12.08.2020 Bulletin 2020/33**

(73) Proprietor: **Nippon Soda Co., Ltd.
Tokyo 100-7010 (JP)**

(72) Inventor: **FUKAWA, Naohiro
Ichihara-shi
Chiba 290-0045 (JP)**

(74) Representative: **Mewburn Ellis LLP
Aurora Building
Counterslip
Bristol BS1 6BX (GB)**

(56) References cited:
JP-A- 2009 155 608    JP-A- 2009 155 608
JP-A- H0 472 329     JP-A- H0 472 329
JP-A- H05 295 108    JP-A- H05 295 108
JP-A- H06 322 109    JP-A- H06 322 109
JP-A- H07 316 288    JP-A- H07 316 288
US-A- 3 042 659      US-A- 4 013 626

• JAN RODA ET AL: "Polymerization of lactams,
37a, Isolation and Characterization of Clkali
Carboxylates of 2-Pyrrolidone", MAKROMOL.
CHEM., RAPID COMMUN., vol. 1, 1 January 1980
(1980-01-01), pages 165 - 169, XP055591846

• RODA, J. ET AL.: "Polymerization of lactams, 37a,
Isolation and Characterization of Clkali
Carboxylates of 2-Pyrrolidone", MAKROMOL.
CHEM., RAPID COMMUN., vol. 1, 1980, pages 165
- 169, XP055591846

## Description

## Technical Field

The present invention relates to a method for producing a polyamide-4 particle.

The present application claims the priority of Japanese Patent Application No. 2017-193534 filed on October 3, 2017.

## Background Art

Polyamide-4 particles are expected to be applied to cosmetics, adsorbents, carriers for catalysts, fibers, and the like. Patent Document 1 describes a method for producing a polyamide particle, characterized that a raw material mixture containing 2-pyrrolidone and/or 2-azetidinone as monomer(s) for polymerization and a basic polymerization catalyst were contacted with a compressible fluid including carbon dioxide whose density is 450 kg/m$^3$ or more, to be melted or dissolved and thereafter ring-opening polymerized. By the method of Patent Document 1 a porous polyamide particle having a d50 diameter of 10 $\mu$m or more and 1000 $\mu$m or less and having a dispersivity of 3.0 or less seems to be produced. Patent Document 2 describes a method for polymerizing $\alpha$-pyrrolidone in a saturated hydrocarbon in the presence of not only a polymerization initiator and a catalyst, but also a higher fatty acid alkali salt. By the method of Patent Document 2 a uniform polymer grain having a diameter of about 0.05 to 2.0 mm seems to be produced. Patent Document 3 describes a method for producing a powdery 2-pyrrolidone polymer, wherein 2-pyrrolidone is polymerized by suspension polymerization in an aprotic solvent with the action of a basic polymerization catalyst and a polymerization initiator such as carbon dioxide gas or sulfur dioxide in the presence of 0.1 to 5% by weight of a compound represented by chemical formula (1) to 2-pyrrolidone.

$$(RCOO)1/2M \quad (1)$$

(wherein R represents a hydrocarbon group having 10 to 30 carbon atoms and M represents a divalent metal)

Patent Document 4 describes activators for the polymerization of 2-pyrrolidone. Patent Document 5 describes a process for the production of poly-2-pyrrolidone wherein the product is washed with monomer to recycle the catalyst. Patent Document 6 describes a monodisperse polyamide of high polymerization degree in high yield made by polymerizing a lactam in the presence of pyrrolidone salt and acyl lactam in a solvent such as lithium salt containing dimethylacetamide. Patent Document 7 describes a powder having excellent whiteness obtained by dissolving laurolactam in paraffin under heating and carrying out alkali-catalyzed polymerization of the monomer in the presence of a polymerization accelerator using sodium hydride as the catalyst. Patent Document 8 describes a process to obtain a 2-pyrrolidone polymer by washing 2-pyrrolidone polymer obtained by suspension polymerization with an aqueous acid solution having a specific pH and then with an organic solvent. Patent Document 9 describes a polyamide 4 copolymer obtained from copolymerization of 2-pyrrolidone with $\varepsilon$-caprolactam using a basic polymerization catalyst and an initiator with a branch structure of two or more branches. Patent Document 10 describes polymerization of $\varepsilon$-caprolactam containing water using a two-component catalyst system comprising a basic organometallic catalyst and a co-catalyst. Non-Patent Document 1 describes the effect of $CO_2$ used as an activator of the anionic polymerization of lactams and the polymerization of 2-pyrrolidone activated with gaseous $CO_2$.

## Prior Art Documents

## Patent Documents

Patent Document 1: Japanese unexamined Patent Application Publication No. 2016-186068
Patent Document 2: Japanese Patent No. S37-6746
Patent Document 3: Japanese unexamined Patent Application Publication No. H05-39355
Patent Document 4: US 3042659 A
Patent Document 5: US 4013626 A
Patent Document 6: JP H06 322109 A
Patent Document 7: JP H04 72329 A
Patent Document 8: JP H05 295108 A
Patent Document 9: JP 2009 155608 A

Patent Document 10: JP H07 316288 A

**Non-Patent Documents**

Non-Patent Document 1: JAN RODA ET AL: "Polymerization of lactams, 37a, Isolation and Characterization of Alkali Carboxylates of 2-Pyrrolidone", MAKROMOL. CHEM. RAPID COMMUN., vol. 1, 1 January 1980, pages 165-169.

**Summary of the Invention**

**Object to be Solved by the Invention**

The method described in Patent Document 1 requires a special apparatus, and thus is not suitable for industrial production. The methods described in Patent Document 2 and Patent Document 3 tend to cause the particle size of a polyamide-4 particle generated to be increased, and thus are not suitable as methods for producing a polyamide-4 particle having a smaller particle size. An object of the present invention is to provide a novel method for producing a polyamide-4 particle having a small particle size.

**Means to Solve the Object**

The present inventor has found a method for producing a polyamide-4 particle, including polymerizing 2-pyrrolidone in an organic solvent in the presence of a polymerization initiator and a 2-pyrrolidone lithium salt.
That is, the present invention relates to the following features.
In a first aspect, provided is a method for producing a polyamide-4 particle, comprising polymerizing 2-pyrrolidone in an aprotic solvent incompatible with 2-pyrrolidone in the presence of a polymerization initiator and a 2-pyrrolidone lithium salt, wherein a volume average particle size of the polyamide-4 particle is 1 $\mu$m to 100 $\mu$m as determined by the methods disclosed herein.
In a second aspect, provided is a method for producing a polyamide-4 particle, comprising polymerizing 2-pyrrolidone in an aprotic solvent incompatible with 2-pyrrolidone in the presence of a polymerization initiator, a 2-pyrrolidone lithium salt and a 2-pyrrolidone sodium salt, wherein a volume average particle size of the polyamide-4 particle is 1 $\mu$m to 100 $\mu$m as determined by the methods disclosed herein.
In one embodiment, provided is a method for producing a polyamide-4 particle, wherein the aprotic solvent incompatible with 2-pyrrolidone is an aliphatic hydrocarbon solvent.
In one embodiment, provided is a method for producing a polyamide-4 particle, wherein a molecular weight distribution (Mw/Mn) of the polyamide-4 particle is 1.0 to 5.0 as determined by the methods disclosed herein.

**Effect of the Invention**

By the production method of the present invention, a polyamide-4 particle having a small particle size may be produced.

**Mode of Carrying Out the Invention**

(Polyamide-4 particle)

A polyamide-4 particle is a particle made of polyamide-4 obtained by polymerization of 2-pyrrolidone. Such 2-pyrrolidone here used may be any commercially available product.
The volume average particle size of the polyamide-4 particle in the present invention is 1 $\mu$m to 100 pm, 1 $\mu$m to 80 $\mu$m, 1 $\mu$m to 70 $\mu$m, 1 $\mu$m to 60 $\mu$m, 1 $\mu$m to 50 $\mu$m, 1 $\mu$m to 40 $\mu$m, or 1 $\mu$m to 30 $\mu$m. The volume average particle size of the polyamide-4 particle in the present invention may be determined by a laser diffraction/scattering particle size distribution measurement apparatus LA-920 (manufactured by Horiba Ltd.) after ultrasonic dispersion of a mixture of the produced polyamide-4 particle with water. The CV (coefficient of variation) of the polyamide-4 particle in the present invention may be calculated according to the following equation with a value of the standard deviation and the average particle size in the particle size distribution on a volume basis.

CV (%) = ((Standard deviation)/(Average particle size)) $\times$ 100

The weight average molecular weight (Mw) of the polyamide-4 produced by the method of the present invention is not particularly limited, but may be selected from 5,000 to 1,000,000, 10,000 to 1,000,000, 10,000 to 500,000, 10,000 to 100,000, and the like. The molecular weight distribution of the polyamide-4 produced by the method of the present invention, in terms of the ratio of weight average molecular weight/number average molecular weight (Mw/Mn), may be selected from 1.0 to 6.0, 1.0 to 4.5, 1.0 to 4.0, 1.0 to 3.5, 1.0 to 3.0, and the like. The weight average molecular weight and the number average molecular weight each here correspond to a value obtained by converting the data obtained by measurement according to gel permeation chromatography (GPC) with hexafluoroisopropanol as a solvent, based on the molecular weight of standard poly (methyl methacrylate).

(Aprotic solvent incompatible with 2-pyrrolidone)

The polymerization in the production method of the present invention is performed in an aprotic solvent incompatible with 2-pyrrolidone. As the aprotic solvent incompatible with 2-pyrrolidone, an aliphatic hydrocarbon solvent such as hexane, octane, decane, dodecane, undecane, tridecane, decalin, 2,2,4,6,6-pentamethylheptane, cyclohexane, decene, isoparaffin, liquid paraffin, kerosene, or petroleum ether may be exemplified. These solvents may be used alone or used by combination of two or more thereof. The aprotic solvent incompatible with 2-pyrrolidone in the present invention also encompasses a mixed solvent of an aprotic solvent compatible with 2-pyrrolidone and an aprotic solvent incompatible with 2-pyrrolidone, which is incompatible with 2-pyrrolidone. As the aprotic solvent compatible with 2-pyrrolidone, toluene, cyclopentyl methyl ether, tetrahydrofuran or the like may be exemplified.

The amount of the aprotic solvent used may be appropriately set depending on the reaction scale or the like. The amount of the aprotic solvent may be usually set within the range from 0.1 to 30 parts by weight, 0.1 to 20 parts by weight, 0.1 to 10 parts by weight, 0.1 to 5 parts by weight, 0.5 to 5 parts by weight, or the like with respect to 1 part by weight of 2-pyrrolidone.

(Polymerization initiator)

As the polymerization initiator, a known polymerization initiator for polymerization of 2-pyrrolidone may be used. As the polymerization initiator, specifically, carbon dioxide gas ($CO_2$); sulfur dioxide ($SO_2$); an acylated product of lactam, such as N-acetylpyrrolidone or N-acetyl $\varepsilon$-caprolactam; a carboxylic acid halide such as acetyl chloride, stearoyl chloride or benzene-1,3,5-tricarbonyl trichloride; a carboxylic anhydride such as acetic anhydride or phthalic anhydride; a carboxylic acid ester such as carboxylic acid methyl ester; an isocyanate compound such as tolylene 2,4-diisocyanate, a reaction product of such a polymerization initiator with a polymerization catalyst, or the like may be exemplified. These polymerization initiators may be used alone or used by combination of two or more thereof.

The amount of the polymerization initiator used may be an amount of 0.01 to 20% by mol, 0.1 to 10% by mol or the like to polymerized 2-pyrrolidone.

(2-Pyrrolidone lithium salt)

The polymerization of 2-pyrrolidone in the production method of the present invention is performed in the presence of a 2-pyrrolidone lithium salt. Although the detail is not clear, it is considered that the 2-pyrrolidone lithium salt is precipitated in the form of a solid and adsorbs to a monomer/solvent interface to result in stabilization of a suspension state. The 2-pyrrolidone lithium salt may be prepared by reacting 2-pyrrolidone with metallic lithium, lithium hydride, alkyllithium, lithium alkoxide, lithium hydroxide or the like. The polymerization may be made by adding a lithium compound to 2-pyrrolidone for polymerization and allowing them to react, and thereafter polymerizing the unreacted 2-pyrrolidone without removal of any 2-pyrrolidone lithium salt produced, or adding a 2-pyrrolidone lithium salt obtained in advance by preparation according to the above procedure, to a polymerization solution containing 2-pyrrolidone.

The amount of the 2-pyrrolidone lithium salt used may be an amount of 0.1 to 20% by mol, 1 to 20% by mol, 1 to 15% by mol or the like relative to 2-pyrrolidone to be polymerized.

A 2-pyrrolidone sodium salt, in addition to the 2-pyrrolidone lithium salt, may be further used in the production method of the present invention. The 2-pyrrolidone sodium salt may be prepared by reacting 2-pyrrolidone with metallic sodium, sodium hydride, sodium amide, sodium alkoxide, sodium hydroxide or the like. The polymerization may be made by adding such a sodium salt by the same formulation as in the 2-pyrrolidone lithium salt.

The 2-pyrrolidone sodium salt may be used to thereby promote the rate of the polymerization reaction. The amount used of the 2-pyrrolidone sodium salt may be an amount used of 0.01 to 20% by mol, 0.1 to 20% by mol, 0.1 to 10% by mol or the like to polymerized 2-pyrrolidone to be.

(Other additive)

The polymerization reaction in the production method of the present invention may be performed in the presence of other additive. As such other additive, a surfactant may be exemplified. As the surfactant, any known surfactant such as an anionic surfactant, a nonionic surfactant or a cationic surfactant may be used.

(Polymerization conditions and the like)

The polymerization reaction of 2-pyrrolidone in the production method of the present invention may be performed with stirring by a stirring blade or the like. The polymerization is preferably performed in a state where 2-pyrrolidone is suspended in the aprotic solvent incompatible with 2-pyrrolidone by vigorous stirring of a reaction solution. That is, the polymerization reaction of 2-pyrrolidone in the production method of the present invention is preferably suspension polymerization. The temperature of the polymerization reaction may be set within the range from 30°C to 60°C, from 40°C to 60°C, or the like. The period of the polymerization reaction is, for example, usually 1 hour to 50 hours depending on the reaction scale or the like. After completion of the polymerization reaction, a polyamide-4 particle may be purified by a known purification method.

**Examples**

The present invention will be described below in more detail with reference to Examples, but the present invention is not limited to the scope of such Examples.

Example 1

2-Pyrrolidone (57.0 g) and liquid paraffin (106.5 g) were placed in a 300-ml separable flask equipped with an edged turbine blade (diameter: 4 cm) in a nitrogen atmosphere, and stirred at 1200 rpm. Subsequently, n-BuLi (13.2 g of a 1.6 M solution in hexane) was added thereto and the resultant was stirred at 30°C for 15 minutes. N-Acetyl-$\varepsilon$-caprolactam (1.74 g) was added thereto, and the resultant was stirred for 5 minutes and thereafter subjected to polymerization at 50°C for 7 hours. After quenching by addition of water and acetic acid, a polymer was isolated by suction filtration. The resulting polymer was washed with water, and thereafter dried under reduced pressure at 80°C to thereby provide a polyamide-4 particle (17.21 g).

Example 2

2-Pyrrolidone (57.6 g), sodium amide (0.31 g) and liquid paraffin (105.6 g) were added into a 300-ml separable flask equipped with an edged turbine blade (diameter: 4 cm) in a nitrogen atmosphere, and stirred at 1200 rpm. Subsequently, n-BuLi (13.11 g of a 1.6 M solution in hexane) was added thereto and the resultant was stirred at 30°C for 15 minutes. N-Acetyl-$\varepsilon$-caprolactam (1.78 g) was added thereto and the resultant was stirred for 5 minutes. The resultant was warmed to 50°C and subjected to polymerization for 7 hours. After quenching by addition of water and acetic acid, a polymer was isolated by suction filtration. The resulting polymer was washed with water, and thereafter dried under reduced pressure at 80°C to thereby provide a polyamide-4 particle (28.66 g).

Example 3

2-Pyrrolidone (56.9 g), sodium amide (0.60 g) and liquid paraffin (104.9 g) were placed in a 300-ml separable flask equipped with a disc turbine blade (diameter: 5 cm) in a nitrogen atmosphere, and stirred at 1200 rpm. Subsequently, n-BuLi (13.10 g of a 1.6 M solution in hexane) was added thereto and the resultant was stirred at 30°C for 15 minutes. N-Acetyl-$\varepsilon$-caprolactam (3.50 g) was added thereto and the resultant was stirred for 5 minutes. The resultant was warmed to 50°C and subjected to polymerization for 7 hours. After quenching by addition of water and acetic acid, a polymer was isolated by suction filtration. The resulting polymer was washed with water, and thereafter dried under reduced pressure at 80°C to thereby provide a polyamide-4 particle (32.02 g).

Comparative Example 1

2-Pyrrolidone (57.2 g), sodium amide (1.77 g) and liquid paraffin (115.9 g) were placed in a 300-ml separable flask equipped with a disc turbine blade (diameter: 5 cm) in a nitrogen atmosphere, and stirred at 1200 rpm and 30°C for 15 minutes. N-Acetyl-$\varepsilon$-caprolactam (3.40 g) was added thereto and the resultant was stirred for 5 minutes. The resultant was warmed to 50°C and subjected to polymerization for 7 hours. After quenching by addition of water and acetic acid, a polymer was isolated by suction filtration. The resulting polymer was washed with water and tetrahydrofuran, and thereafter dried under reduced pressure at 80°C to thereby provide polyamide-4 (41.16 g). A particle of the resulting polyamide-4 was partially aggregated in the form of a grain.

Comparative Example 2

2-Pyrrolidone (56.9 g), potassium t-butoxide (5.30 g) and liquid paraffin (118.0 g) were added into a 300-ml separable flask equipped with a disc turbine blade (diameter: 5 cm) in a nitrogen atmosphere, and stirred at 1200 rpm and 30°C for 15 minutes. N-Acetyl-$\varepsilon$-caprolactam (3.53 g) was added thereto and the resultant was stirred for 5 minutes. The resultant was warmed to 50°C and subjected to polymerization for 7 hours. After quenching by addition of water and acetic acid, a polymer was isolated by suction filtration. The resulting polymer was washed with water and tetrahydrofuran, and thereafter dried under reduced pressure at 80°C to thereby provide polyamide-4 (38.24 g). A particle of the resulting polyamide-4 was partially aggregated in the form of a grain.

Each polyamide-4 particle obtained in Examples 1 to 3 and Comparative Examples 1 and 2 was subjected to measurement of the volume average particle size, the CV (coefficient of variation), the weight average molecular weight (Mw) and the molecular weight distribution (Mw/Mn). The results are shown in Table 1.

[Table 1]

| | Kind of cation of 2-pyrrolidone metal salt (*) | Molar ratio of 2-pyrrolidone metal salt to 2-pyrrolidone [%] | Molar ratio of initiator [%] | Yield [%] | Mw [$\times 10^3$] | Molecular weight distribution | Volume average particle size | CV [%] |
|---|---|---|---|---|---|---|---|---|
| Example 1 | Li | 4.6 | 1.7 | 30.2 | 36.4 | 2.89 | 18.6 $\mu$m | 56.6 |
| Example 2 | Li/Na | 4.5/1.2 | 1.7 | 49.8 | 79.7 | 5.69 | 29.6 $\mu$m | 48.6 |
| Example 3 | Li/Na | 4.6/2.3 | 3.4 | 56.3 | 28.7 | 2.93 | 15.5 $\mu$m | 38.9 |
| Comparative Example 1 | Na | 6.8 | 3.3 | 71.9 | 24.2 | 3.33 | Unmeasurable** | - |
| Comparative Example 2 | K | 7.1 | 3.4 | 67.2 | 22.3 | 3.09 | Unmeasurable** | - |
| * Each 2-pyrrolidone metal salt was produced in addition of a metal compound such as n-BuLi to 2-pyrrolidone. ** Each particle produced in Comparative Examples 1 and 2 was so large in particle size that measurement of the volume average particle size could not be made. | | | | | | | | |

Example 4

2-Pyrrolidone (57.7 g), sodium amide (0.64 g) and hexane (98.7 g) were placed in a 300-ml separable flask equipped with a disc turbine blade (diameter: 5 cm) in a nitrogen atmosphere, and stirred at 1200 rpm. Subsequently, n-BuLi (19.6 g of a 1.6 M solution in hexane) was added thereto and the resultant was stirred at 30°C for 15 minutes. N-Acetyl-$\varepsilon$-caprolactam (3.6 g) was added thereto and the resultant was subjected to polymerization at 30°C for 7 hours. After quenching by addition of water and acetic acid, a polymer was isolated by suction filtration. The resulting polymer was washed with water, and thereafter dried under reduced pressure at 80°C to thereby provide a polyamide-4 particle (32.58 g).

Example 5

2-Pyrrolidone (56.7 g), sodium amide (0.62 g), liquid paraffin (89.2 g) and toluene (15.8 g) were placed in a 300-ml separable flask equipped with a disc turbine blade (diameter: 5 cm) in a nitrogen atmosphere, and stirred at 1200 rpm. Subsequently, n-BuLi (13.1 g of a 1.6 M solution in hexane) was added thereto and the resultant was stirred at 30°C for 15 minutes. N-Acetyl-$\varepsilon$-caprolactam (3.4 g) was added thereto and the resultant was stirred for 5 minutes. The resultant was warmed to 50°C and subjected to polymerization for 7 hours. After quenching by addition of water and acetic acid, a polymer was isolated by suction filtration. The resulting polymer was washed with water and tetrahydrofuran, and thereafter dried under reduced pressure at 80°C to thereby provide a polyamide-4 particle (35.57 g).

Example 6

2-Pyrrolidone (56.8 g), sodium amide (0.65 g), liquid paraffin (89.2 g) and tetrahydrofuran (15.8 g) were placed in a 300-ml separable flask equipped with a disc turbine blade (diameter: 5 cm) in a nitrogen atmosphere, and stirred at 1200 rpm. Subsequently, n-BuLi (13.3 g of a 1.6 M solution in hexane) was added thereto and the resultant was stirred at 30°C for 15 minutes. N-Acetyl-ε-caprolactam (3.5 g) was added thereto and the resultant was stirred for 5 minutes. The resultant was warmed to 50°C and subjected to polymerization for 7 hours. After quenching by addition of water and acetic acid, a polymer was isolated by suction filtration. The resulting polymer was washed with water and tetrahydrofuran, and thereafter dried under reduced pressure at 80°C to thereby provide a polyamide-4 particle (31.70 g).

Each polyamide-4 particle obtained in Examples 4 to 6 was subjected to measurement of the volume average particle size, the CV (coefficient of variation), the weight average molecular weight (Mw) and the molecular weight distribution (Mw/Mn). The results are shown in Table 2.

[Table 2]

|  | Dispersion medium | Molar ratio of 2-pyrrolidone metal salt to 2-pyrrolidone Li/Na[%/%] | Molar ratio of initiator [%] | Yield [%] | Mw [$\times 10^3$] | Molecular weight distribution | Volume average particle size | CV [%] |
|---|---|---|---|---|---|---|---|---|
| Example 4 | Hexane | 6.8/2.4 | 3.4 | 56.5 | 20.1 | 2.59 | 77.3 $\mu$m | 50.8 |
| Example 5 | Liquid paraffin/ toluene 85/15 w/w | 4.6/2.4 | 3.3 | 62.7 | 29.0 | 3.46 | 23.6 $\mu$m | 52.0 |
| Example 6 | Liquid paraffin/THF 85/15 w/w | 4.7/2.5 | 3.4 | 55.8 | 39.0 | 3.76 | 23.7 $\mu$m | 52.3 |

<Measurement of volume average particle size and CV (coefficient of variation)>

These were determined by a laser diffraction/scattering particle size distribution measurement apparatus LA-920 (manufactured by Horiba Ltd.). The determination was performed after ultrasonic dispersion of a mixture of the resulting polyamide-4 particle with water.

The CV (coefficient of variation) is defined by the following equation with a value of the standard deviation and the average particle size in the particle size distribution on a volume basis.

CV (%) = ((Standard deviation)/(Average particle size)) $\times$ 100

<Measurement of weight average molecular weight and molecular weight distribution>

These were each calculated by converting the data obtained by measurement according to gel permeation chromatography (GPC) with, as a solvent, a solution of 10 mM sodium trifluoroacetate in hexafluoroisopropanol, based on the molecular weight of standard poly(methyl methacrylate).

The molecular weight distribution is defined by the following equation.

Molecular weight distribution = Weight average molecular weight (Mw)/Number average molecular weight (Mn).

**Claims**

1. A method for producing a polyamide-4 particle, comprising polymerizing 2-pyrrolidone in an aprotic solvent incompatible with 2-pyrrolidone in the presence of a polymerization initiator and a 2-pyrrolidone lithium salt, wherein a volume average particle size of the polyamide-4 particle is 1 μm to 100 μm as determined by the methods disclosed in the description.

2. A method for producing a polyamide-4 particle, comprising polymerizing 2-pyrrolidone in an aprotic solvent incompatible with 2-pyrrolidone in the presence of a polymerization initiator, a 2-pyrrolidone lithium salt and a 2-pyrrolidone sodium salt, wherein
a volume average particle size of the polyamide-4 particle is 1 μm to 100 μm as determined by the methods disclosed in the description.

3. The method for producing a polyamide-4 particle according to claim 1 or 2, wherein the aprotic solvent incompatible with 2-pyrrolidone is an aliphatic hydrocarbon solvent.

4. The method for producing a polyamide-4 particle according to any one of claims 1 to 3, wherein a molecular weight distribution (Mw/Mn) of the polyamide-4 particle is 1.0 to 5.0 as determined by the methods disclosed in the description.

## Patentansprüche

1. Verfahren zur Herstellung eines Polyamid-4-Teilchens, welches das Polymerisieren von 2-Pyrrolidon in einem aprotischen Lösungsmittel, das mit 2-Pyrrolidon inkompatibel ist, in Gegenwart eines Polymerisationsinitiators und eines Lithiumsalzes von 2-Pyrrolidon umfasst, wobei
die nach den in der Beschreibung offenbarten Verfahren gemessene volumenmittlere Teilchengröße des Polyamid-4-Teilchens 1 μm bis 100 μm beträgt.

2. Verfahren zur Herstellung eines Polyamid-4-Teilchens, welches das Polymerisieren von 2-Pyrrolidon in einem aprotischen Lösungsmittel, das mit 2-Pyrrolidon inkompatibel ist, in Gegenwart eines Polymerisationsinitiators, eines Lithiumsalzes von 2-Pyrrolidon und eines Natriumsalzes von 2-Pyrrolidon umfasst, wobei
die nach den in der Beschreibung offenbarten Verfahren gemessene volumenmittlere Teilchengröße des Polyamid-4-Teilchens 1 μm bis 100 μm beträgt.

3. Verfahren zur Herstellung eines Polyamid-4-Teilchens nach Anspruch 1 oder 2, wobei das aprotische Lösungsmittel, das mit 2-Pyrrolidon inkompatibel ist, ein aliphatisches Kohlenwasserstoff-Lösungsmittel ist.

4. Verfahren zur Herstellung eines Polyamid-4-Teilchens nach einem der Ansprüche 1 bis 3, wobei die nach den in der Beschreibung offenbarten Verfahren gemessene Molekulargewichtsverteilung (Mw/Mn) des Polyamid-4-Teilchens 1,0 bis 5,0 beträgt.

## Revendications

1. Procédé de production d'une particule de polyamide 4, comprenant la polymérisation de 2-pyrrolidone dans un solvant aprotique incompatible avec la 2-pyrrolidone en présence d'un initiateur de polymérisation et d'un sel de lithium de 2-pyrrolidone, dans lequel
une taille de particule moyenne en volume de la particule de polyamide-4 est de 1 um à 100 um telle que déterminée par les procédés divulgués dans la description.

2. Procédé de production d'une particule de polyamide 4, comprenant la polymérisation de 2-pyrrolidone dans un solvant aprotique incompatible avec la 2-pyrrolidone en présence d'un initiateur de polymérisation, d'un sel de lithium de 2-pyrrolidone et d'un sel de sodium de 2-pyrrolidone, dans lequel
une taille de particule moyenne en volume de la particule de polyamide-4 est de 1 um à 100 um telle que déterminée par les procédés divulgués dans la description.

3. Procédé de production d'une particule de polyamide-4 selon la revendication 1 ou 2, dans lequel le solvant aprotique incompatible avec la 2-pyrrolidone est un solvant hydrocarboné aliphatique.

4. Procédé de production d'une particule de polyamide-4 selon l'une quelconque des revendications 1 à 3, dans lequel une distribution de poids moléculaire (Mw/Mn) de la particule de polyamide-4 est de 1,0 à 5,0 telle que déterminée par les procédés divulgués dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017193534 A
- JP 2016186068 A
- JP 376746 A
- JP H0539355 A
- US 3042659 A
- US 4013626 A
- JP H06322109 A
- JP H0472329 A
- JP H05295108 A
- JP 2009155608 A
- JP H07316288 A

**Non-patent literature cited in the description**

- **JAN RODA et al.** Polymerization of lactams, 37a, Isolation and Characterization of Alkali Carboxylates of 2-Pyrrolidone. *MAKROMOL. CHEM. RAPID COMMUN.,* 01 January 1980, vol. 1, 165-169